# FASCICULE DE BREVET EUROPEEN

(11) **EP 2 006 753 B1**
(45) Date de publication et mention de la délivrance du brevet: **19.10.2011**
(21) Numéro de dépôt: 08104000.8
(22) Date de dépôt: 16.05.2008
(51) Int. Cl.: G05B 19/05

(54) **Module d'entrées analogiques isolées à faible courant de fuite**
Modul für analoge isolierte Eingänge mit niederigem Leckstrom
Module with isolated analogue inputs having low leakage current

(30) Priorité: 19.06.2007 FR 0755830
(43) Date de publication de la demande: 24.12.2008
(73) Titulaire: Schneider Electric Industries SAS, 92500 Rueil-Malmaison (FR)
(72) Inventeur: RUGO, Serge, 06550, LA ROQUETTE SUR SIAGNE (FR); TONET, Richard, 06650, LE ROURET (FR)
(74) Mandataire: Bié, Nicolas

(56) Documents cités:
- WO-A-01/88644
- US-A- 4 821 167

## Description

La présente invention se rapporte à un module d'entrées analogiques utilisé dans un automate programmable.

Un automate programmable ou PLC ("Programmable Logical Controller") est un équipement d'automatisme capable de piloter, commander et/ou surveiller un ou plusieurs process à commander.

De construction généralement modulaire, un automate programmable PLC est composé de différents modules qui communiquent entre eux par un bus de transmission, appelé dans ce domaine bus "fond de panier" (ou "backplane"). Les modules sont fixés mécaniquement dans un rack, lequel comprend un circuit imprimé qui supporte également le bus fond de panier ainsi que les éléments de connexion destinés à coopérer avec des connecteurs présents généralement sur la partie arrière des modules de manière à réaliser la liaison nécessaire entre les modules et le bus. Le nombre de modules dépend bien entendu de la taille et du type de process à automatiser.

Typiquement, un automate programmable peut comporter :
- un module d'alimentation fournissant les différentes tensions aux autres modules à travers le bus fond de panier.
- un module unité centrale UC qui comporte un logiciel embarqué, appelé programme constructeur ("firmware"), intégrant un système d'exploitation OS temps réel, et un programme d'application, ou programme utilisateur, contenant les instructions à exécuter par le logiciel embarqué pour effectuer les opérations d'automatisme souhaitées. Le module UC comporte aussi généralement une connexion en face avant vers des outils de programmation de type ordinateur personnel PC.
- des modules d'entrées/sorties E/S de divers types en fonction du process à commander, tels que E/S numériques ou TOR, analogiques, de comptage, etc. Ces modules E/S sont reliés à des capteurs et des actionneurs participant à la gestion automatisée du process.
- un ou plusieurs modules de communication vers des réseaux de communication (Ethernet, CAN, ...) ou des interfaces homme-machine (écran, clavier,...).

A titre d'exemple, un module d'entrées/sorties peut comporter entre 1 et 32 voies E/S, un automate PLC pouvant être capable suivant les modèles de gérer plusieurs centaines de voies E/S. En cas de besoin, plusieurs racks sont donc connectés entre eux dans un même PLC. Ainsi, en fonction de l'application et du process à automatiser, un automate PLC peut comporter un grand nombre de modules.

Actuellement, des modules d'entrées analogiques comportent plusieurs voies isolées entre elles à l'aide de relais statiques à isolation optique appelé également "OptoMos" (marque déposée). Chaque voie du module est commandée par deux relais statiques dont un des pôles des MOS est commun. Ces composants ont une durée de vie presque illimitée mais présentent chacun un courant de fuite non négligeable. Ainsi, lorsque le module comporte plus de quatre voies, les courants de fuite unitaires de chacun des relais statiques s'additionnent ce qui entraîne des erreurs conséquentes dans les mesures.

Le document US 4 821 167 divulgue un module d'entrée typique pour automate programmable dans lequel les entrées analogiques sont multiplexées pour être délivrées à un unique convertisseur A/N°

Le but de l'invention est de proposer un module d'entrées analogiques comportant plusieurs voies isolées entre elles, dans lequel les courants de fuite sont particulièrement réduits afin de pouvoir toujours garantir la précision des mesures.

Ce but est atteint par un module d'entrées analogiques isolées pour automate programmable, ledit module comportant plusieurs voies d'entrées isolées entre elles chacune à l'aide d'au moins un relais statique à isolation optique commandé sélectivement à l'aide de moyens de commande, ledit module étant caractérisé en ce qu'il comporte un multiplexeur doté de plusieurs canaux commandés chacun à l'ouverture ou à la fermeture, un canal du multiplexeur étant placé en série d'une voie d'entrée isolée du module.

Selon une particularité, chaque voie d'entrée est isolée à l'aide de deux relais statiques à isolation optique montés en série.

Selon une autre particularité, le multiplexeur est de type analogique basse tension.

Selon une autre particularité, le multiplexeur comporte des moyens de commande destinés à commander sélectivement chacun de ses canaux.

Selon une autre particularité, les moyens de commande du multiplexeur sont couplés aux moyens de commande des relais statiques à isolation optique.

Selon une autre particularité, le multiplexeur comporte huit canaux. Il comporte au moins autant de canaux que de voies dans le module. S'il comporte plus de canaux que de voix dans le module, certains de ses canaux peuvent être employés pour l'autocalibration de la chaîne de mesure.

Le module selon l'invention est adapté pour être employé dans un automate programmable modulaire.

D'autres caractéristiques et avantages vont apparaître dans la description détaillée qui suit en se référant à un mode de réalisation donné à titre d'exemple et représenté par les dessins annexés sur lesquels :

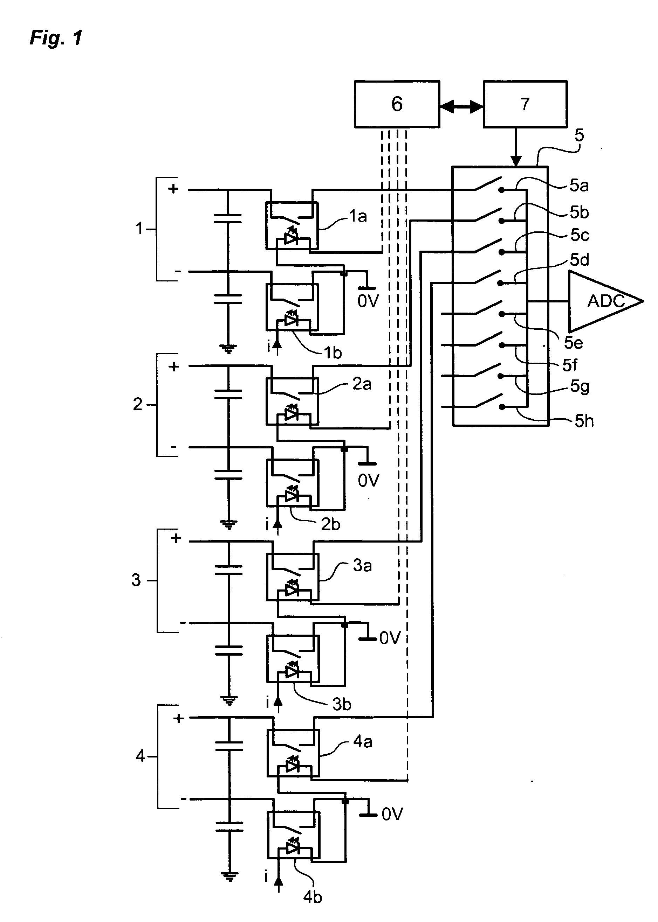

- la figure 1 représente schématiquement la structure de l'invention.

Un module d'entrées analogiques comporte plusieurs voies 1, 2, 3, 4 isolées à l'aide de relais statiques à isolation optique, appelés également "OptoMos" (marque déposée). Ce type de composant est notamment décrit dans le brevet US 4,390,790. Plus précisément, ce type de relais statique à isolation optique 1a, 1b, 2a, 2b, 3a, 3b, 4a, 4b (ci-après 1a-4b) comporte un circuit d'entrée composé d'une diode électroluminescente apte à convertir un signal de commande d'entrée (i sur la figure 1) en lumière infrarouge. La diode électroluminescente est couplée optiquement à un circuit de conversion formé d'un ensemble de cellules photovoltaïques et de circuits de pilotage associés. La cellule photovoltaïque génère la tension nécessaire au contrôle d'un circuit MOSFET (représenté de manière simplifiée par un simple interrupteur) qui commute la charge de sortie..

En référence à la figure 1, dans un module d'entrées analogiques isolées, chaque voie comporte deux relais statiques à isolation optique (ci-après relais statique). Pour chaque voie d'entrée, les deux relais statiques sont reliés en série par leur circuit d'entrée. Les entrées des circuits MOSFET sont reliées à un bornier définissant matériellement les différentes voies sur lesquelles viennent se connecter les capteurs. Des moyens de commande 6 permettent de commander sélectivement chaque voie d'entrée 1-4 en envoyant le signal de commande dans les circuits d'entrée des deux relais statiques en série. Les relais statiques à isolation optique supportent des tensions pouvant aller jusqu'à 600 Volts pour des temps de commutation inférieurs à 1 ms.

Les relais statiques à isolation optique 1a-4b permettent d'isoler les voies entre elles. Pour les voies d'entrées non sélectionnées, ces relais statiques laissent passer chacun un courant de fuite non négligeable. L'addition de ces courants de fuite entraîne des erreurs sur les mesures qui peuvent s'avérer rédhibitoires lorsque le nombre de voies est supérieur à quatre.

Selon l'invention, un multiplexeur analogique 5 basse tension (tension d'alimentation continue comprise entre +30VDC et -30VDC environ) est donc placé entre le convertisseur analogique-numérique ADC et les relais statiques 1a-4b. Ce multiplexeur 5 présente un nombre de canaux au moins égal au nombre de voies du module d'entrée. Sur la figure 1, chaque canal 5a-5h du multiplexeur 5 est commandé par un interrupteur distinct connecté d'une part sur le circuit MOSFET du premier relais statique à isolation optique 1a, 2a, 3a, 4a d'une voie 1-4 et d'autre part sur le convertisseur analogique-numérique ADC. La sortie du circuit MOSFET du second relais statique 1b, 2b, 3b, 4b de chaque voie est pour sa part reliée au zéro volt analogique. Les interrupteurs du multiplexeur 5 peuvent par exemple présenter une structure de type MOSFET et permettent de limiter les courants de fuite à destination du convertisseur analogique-numérique ADC à quelques nanoampères.

Le multiplexeur 5 comporte par exemple huit canaux 5a-5h et des moyens de commande 7 permettant de commander sélectivement chacune des voies. Le multiplexeur 5 est par exemple disponible sous la référence ADG508F. Les moyens de commande 7 du multiplexeur sont par exemple couplés aux moyens de commande 6 des relais statiques 1a-4b de manière à synchroniser la commande sélective d'ouverture/fermeture de chacune des voies 1-4 et la commande sélective d'ouverture/fermeture du canal 5a-5h correspondant du multiplexeur 5.

Lorsque son nombre de canaux est suffisant, le multiplexeur 5 peut réaliser deux fonctions. La première fonction déjà décrite ci-dessus est de réduire les courants de fuite des relais statiques 1a-4b en connectant chaque voie d'entrée sur un canal 5a-5d du multiplexeur 5. Le multiplexeur peut en outre être impliqué dans l'autocalibration de la chaîne de mesure. En effet, afin d'éviter des procédures de calibration périodique pour garantir la précision des mesures, il est connu d'embarquer une fonction d'autocalibration réalisée grâce au microprocesseur de la carte du module d'entrée. L'autocalibration de la chaîne de mesure est réalisée à l'aide d'un circuit de référence de tension précis et du multiplexeur. Dans ce cas, le multiplexeur 5 permet d'aiguiller la référence de tension pour la mesurer et de court-circuiter l'entrée du bus pour mesurer la tension d'offset. Ces deux mesures réalisées cycliquement permettent de compenser les erreurs de mesure de la chaîne d'acquisition.

Ainsi, lorsque le module comporte quatre voies d'entrée 1-4 et que le multiplexeur comporte huit canaux 5a-5h comme représenté sur la figure 1, quatre canaux 5a-5d du multiplexeur 5 sont mis en série avec les relais statiques à isolation optique pour limiter les courants de fuite et les quatre autres canaux 5e-5h peuvent être employés de la manière suivante :
- un canal aiguille la référence de tension,
- un canal aiguille la masse,
- un canal aiguille l'alimentation (5 Volts) destinée à détecter une panne de référence de tension,
- un canal ne sert pas et est relié à la masse.

## Revendications

1. Module d'entrées analogiques isolées pour automate programmable, ledit module comportant plusieurs voies d'entrées isolées chacune à l'aide d'au moins un relais statique à isolation optique (1 a-4b) commandé sélectivement à l'aide de moyens de commande (6), et comportant un multiplexeur (5) doté de plusieurs canaux (5a-5h) commandés chacun à l'ouverture ou à la fermeture, un canal du multiplexeur (5) étant placé en série d'une voie d'entrée (1-4) isolée du module.

2. Module selon la revendication 1, **caractérisé en ce que** chaque voie d'entrée est isolée à l'aide de deux relais statiques à isolation optique (1a-4b) montés en série.

3. Module selon la revendication 1 ou 2, **caractérisé en ce que** le multiplexeur est de type analogique basse tension.

4. Module selon l'une des revendications 1 à 3, **caractérisé en ce que** le multiplexeur (5) comporte des moyens de commande (7) destinés à commander sélectivement chacun de ses canaux (5a-5h).

5. Module selon la revendication 4, **caractérisé en ce que** les moyens de commande (7) du multiplexeur (5) sont couplés aux moyens de commande (6) des relais statiques à isolation optique (1 a-4b).

6. Module selon l'une des revendications 1 à 5, **caractérisé en ce que** le multiplexeur (5) comporte huit canaux (5a-5h).

7. Automate programmable, **caractérisé en ce qu'**il comporte au moins un module défini dans l'une des revendications 1 à 6.

## Claims

1. Module with isolated analogue inputs for programmable controller, the said module comprising several input pathways that are each isolated with the aid of at least one optical isolation static relay (1a-4b) controlled selectively with the aid of control means (6), and comprising a multiplexer (5) furnished with several channels (5a-5h) each controlled to open or to close, a channel of the multiplexer (5) being placed in series with an isolated input pathway (1-4) of the module.

2. Module according to Claim 1, **characterized in that** each input pathway is isolated with the aid of two optical isolation static relays (1 a-4b) arranged in series.

3. Module according to Claim 1 or 2, **characterized in that** the multiplexer is of low-voltage analogue type.

4. Module according to one of Claims 1 to 3, **characterized in that** the multiplexer (5) comprises control means (7) intended to selectively control each of its channels (5a-5h).

5. Module according to Claim 4, **characterized in that** the control means (7) of the multiplexer (5) are coupled to the control means (6) of the optical isolation static relays (1 a-4b).

6. Module according to one of Claims 1 to 5, **characterized in that** the multiplexer (5) comprises eight channels (5a-5h).

7. Programmable controller, **characterized in that** it comprises at least one module defined in one of Claims 1 to 6.

## Patentansprüche

1. Modul mit isolierten analogen Eingängen für programmierbare Automaten, wobei das Modul mehrere Eingangswege, die jeweils mit Hilfe wenigstens eines statischen Relais mit optischer Isolation (1a-4b), das wahlweise mit Hilfe von Steuermitteln (6) gesteuert wird, isoliert sind, und einen Multiplexer (5), der mit mehreren Kanälen (5a-5h) versehen ist, die jeweils in den offenen oder in den geschlossenen Zustand gesteuert werden, umfasst, wobei ein Kanal des Multiplexers (5) in Reihe mit einem isolierten Eingangsweg (1-4) des Moduls angeordnet ist.

2. Modul nach Anspruch 1, **dadurch gekennzeichnet, dass** jeder Eingangsweg mit Hilfe von zwei in Reihe geschalteten statischen Relais mit optischer Isolation (1a-4b) isoliert ist.

3. Modul nach Anspruch 1 oder 2, **dadurch gekennzeichnet, dass** der Multiplexer vom analogen Niederspannungstyp ist.

4. Modul nach einem der Ansprüche 1 bis 3, **dadurch gekennzeichnet, dass** der Multiplexer (5) Steuermittel (7) umfasst, die dazu bestimmt sind, jeden seiner Kanäle (5a-5h) wahlweise zu steuern.

5. Modul nach Anspruch 4, **dadurch gekennzeichnet, dass** die Steuermittel (7) des Multiplexers (5) mit den Steuermitteln (6) der statischen Relais mit optischer Isolation (1a-4b) gekoppelt sind.

6. Modul nach einem der Ansprüche 1 bis 5, **dadurch gekennzeichnet, dass** der Multiplexer (5) acht Kanäle (5a-5h) enthält.

7. Programmierbarer Automat, **dadurch gekennzeichnet, dass** er wenigstens ein Modul wie in einem der Ansprüche 1 bis 6 definiert umfasst.
